# FASCICULE DE BREVET EUROPEEN

(11) **EP 0 630 575 B1**
(45) Date de publication et mention de la délivrance du brevet: **22.12.1999**
(21) Numéro de dépôt: 94401065.1
(22) Date de dépôt: 11.05.1994
(51) Int. Cl.: A23G 3/26, A23G 3/20, A23G 3/00

(54) **Procédé d'enrobage sans sucre et produits obtenus selon le procédé**
Verfahren zum ohne Zucker Beschichten und nach diesem Verfahren hergestellte Produkte
Process for sugarless coating and products manufactured according to this process

(30) Priorité: 17.05.1993 FR 9305918
(43) Date de publication de la demande: 28.12.1994
(73) Titulaire: Roquette Frères, 62136 Lestrem (FR)
(72) Inventeur: Serpelloni, Michel, F-62660 Beuvry les Bethune (FR); Ribadeau-Dumas, Guillaume, F-59130 Lambersart (FR)
(74) Mandataire: Boulinguiez, Didier

(56) Documents cités:
- EP-A- 0 228 999
- FR-A- 2 522 250
- GB-A- 2 079 129
- DATABASE WPI Derwent Publications Ltd., London, GB; AN 87-003714 & JP-A-61 263 915 (HAYASHIBARA BIOCHEM.) 21 Novembre 1986
- DATABASE WPI Derwent Publications Ltd., London, GB; AN 91-153780 & JP-A-3 090 020 (TANABE SEIYAKU) 16 Avril 1991
- FOOD TECHNOLOGY, vol.21, no.1064, Août 1967 pages 12 - 14 L. JOKAY ET AL. 'development of edible amylaceous coating for food'
- CHEMICAL ABSTRACTS, vol. 96, no. 9, 26 Avril 1982, Columbus, Ohio, US; abstract no. 141429r, S. R. CHERUKURI ET AL. 'sugarless coating for chewing gum and confections' & ZA-A-8 003 927 (S. R. CHERUKURU ET AL.) 28 Juillet 1981

## Description

La présente invention a pour objet un procédé d'enrobage au maltitol permettant la création aisée et rapide d'un revêtement à la surface d'un produit.

Elle vise également les revêtements et les produits revêtus obtenus par application du procédé.

Le maltitol est un sucre-alcool, de saveur sucrée proche de celle du sucre, et de formulation chimique C12 H24 O11. Il est notamment produit industriellement par hydrogénation de D-maltose, lui-même issu de l'hydrolyse dans des conditions très spécifiques d'amidon ou de fécule.

Le maltitol est commercialisé depuis une vingtaine d'années sous forme de sirops dits non cristallisables, ne contenant que de 20 à 65 % de maltitol. On connaît en particulier les produits commercialisés sous les marques POLYSORB^{R} et LYCASIN^{R} 80/55.

C'est grâce aux progrès dans les domaines de l'enzymologie et des techniques séparatives que sont apparus par la suite des sirops plus riches en maltitol, en contenant de 70 % à 87 %, tels que les produits vendus sous les marques MALTISORB^{R} 75/75, MALBIT^{R} et MALTIDEX^{R}, mais également des poudres de maltitol pseudo-cristallines contenant en général 82 à 87 % de maltitol, parmi lesquelles on retiendra les produits commercialisés sous le nom de MALTI-TOWA, et la marque MALBIT^{R}.

Ce n'est que depuis ces dernières années que l'on est parvenu moyennant l'utilisation de nouvelles technologies à préparer à l'échelle industrielle des poudres de maltitol de pureté supérieure à 90 % comme le produit vendu sous la marque AMALTY^{R}. D'autres poudres, plus pures encore, en contiennent plus de 95 % et atteignent même 99 % de maltitol. On retiendra comme produit de cette classe celui dénommé sous la marque MALTISORB^{R} cristallisé. Dans le cadre de la présente invention, on s'intéressera en particulier à ces produits de haute pureté.

L'enrobage est une opération unitaire employée dans bon nombre de domaines parmi lesquels ceux de la confiserie, de la pharmacie, de l'industrie des semences et des engrais mais aussi dans l'industrie des additifs tels que les arômes, les édulcorants, les vitamines, les enzymes, les acides et les produits phytosanitaires. Cette opération consiste à créer un revêtement à la surface de produits, solides ou pulvérulents, que l'on souhaite protéger pour diverses raisons ou bien rendre attractifs visuellement ou gustativement.

Il existe plusieurs types d'enrobage :
- le gommage (ou vernissage) est une technique dans laquelle sont utilisés des sirops de matières non cristallisables et en général non hygroscopiques comme les gommes arabiques, les amidons et les celluloses modifiés, les maltodextrines. Cette technique permet, après une ou deux applications du sirop sur le produit à revêtir, de créer un film vitreux faisant barrière à la migration de l'oxygène, de l'eau ou des matières grasses. Dans ce procédé peuvent également être employées conjointement à ces sirops non cristallisables, des poudres de diverse nature, de façon à fixer l'eau apportée par les sirops. Dans d'autres cas encore, on emploie des sucres ou des polyols fondus ou liquéfiés par des solvants. Le revêtement vitreux, dur et cassant, est obtenu alors par refroidissement ou par évaporation des solvants.
- la dragéification tendre qui consiste à créer un revêtement plutôt souple et tendre à la surface des produits. Ce revêtement est obtenu par application répétées d'une part d'un sirop non cristallisable comme en général les hydrolysats d'amidons, et d'autre part d'une poudre, en général du saccharose cristallisé. Le revêtement est habituellement épais. En effet, le taux de grossissage c'est à dire l'accroissement en poids des produits, considérés en fin d'opération par rapport au début, rapporté au poids final des produits, est de l'ordre de 10 à 80 % voire davantage. Il est à noter que la matière constitutive du sirop est habituellement différente de celle de la poudre, et qu'aucun séchage n'est par ailleurs réalisé.
- la dragéification dure qui nécessite l'utilisation d'un sirop contenant des matières cristallisables. Un revêtement dur et cristallin s'obtient alors par application du sirop et évaporation de l'eau apportée par celui-ci grâce à un séchage par air chaud et sec. Ce cycle doit être répété un très grand nombre de fois, c'est à dire un nombre bien supérieur à celui nécessaire en dragéification tendre pour obtenir un taux de grossissage identique. Ce dernier est dans le cas présent en général voisin de 20 %. La dragéification dure vise à obtenir une couche croustillante et sucrée, toujours très appréciée des amateurs de confiseries.
- le lissage qui consiste en une ou deux applications ou charges d'un sirop cristallisable dilué par rapport à celui utilisé en dragéification dure. Le but est souvent de parfaire l'aspect de surface de produits dragéifiés.
- le givrage qui vise également à améliorer l'aspect des produits, mais aussi à isoler ces derniers de l'humidité de l'atmosphère. Cette technique ressemble à une dragéification dure, en ce sens qu'un sirop cristallisable est utilisé. La différence essentielle réside dans le fait que le nombre de cycles réalisés n'est que d'un, deux ou trois seulement.
- le sucrage qui consiste à faire adhérer à la surface des produits, de fins cristaux de sucre en les humectant préalablement avec de la vapeur plutôt sèche, ou avec une solution chaude de gomme arabique ou de maltodextrine. Les produits sont par la suite toujours séchés.
- le candissage qui est une technique par laquelle on crée un revêtement cristallin à la surface des produits en les baignant pendant plusieurs heures dans un sirop sursaturé de matière cristallisable. La surface des produits est ainsi embellie par la présence d'une couverture de microcristaux.

On s'intéressera dans le cadre de la présente invention à toutes les techniques pouvant nécessiter l'emploi d'une turbine de dragéification ou d'un matériel rotatif à effet similaire c'est à dire à toutes les techniques d'enrobage décrites ci-dessus à l'exception du candissage. Il faut savoir par ailleurs que ces techniques peuvent être combinées. Par exemple, une dragéification dure pourra être précédée d'un gommage et suivie d'un lissage.

Plusieurs de ces procédés d'enrobage ont été appliqués en utilisant des polyols tels le sorbitol, le mannitol, le xylitol, les hydrolysats d'amidon hydrogénés, le maltitol, le lactitol, l'érythritol et l'isomaltulose hydrogéné. Ils sont abondamment décrits dans la littérature. On peut les classer en deux grandes catégories.

Un premier groupe de procédés est couramment employé industriellement en particulier pour le sorbitol et le xylitol. Ces procédés s'apparentent à une dragéification dure et consistent à appliquer à la surface des produits que l'on souhaite dragéifier, en général des confiseries, un sirop ou une suspension cristallisable. Il faut entendre par le mot cristallisable le fait que le sirop ou la suspension de polyol appliqué à la surface des produits, est suffisamment riche en l'un ou l'autre des polyols donnés ci-dessus de sorte que par évaporation d'eau, au moyen d'air dans les turbines de dragéification, on obtienne un revêtement de nature cristalline. De tels procédés ont été décrits bon nombre de fois. On citera à titre d'exemple le brevet EP 37 407 dont la Demanderesse est titulaire et qui concerne le sorbitol. On retiendra également le brevet EP 201 412 dont la Demanderesse est également titulaire et le brevet JP 61 263 915 qui traitent tous deux spécifiquement de l'utilisation de sirops de maltitol.

Ces procédés, qui correspondent en fait à une dragéification dure, se caractérisent par le fait qu'ils comprennent un grand nombre de cycles à la manière du procédé traditionnel avec sucre. Chacun de ces cycles répétitifs comporte toujours une première étape de pulvérisation du sirop de polyol sur le lit en mouvement de produits à dragéifier, une second étape permettant la répartition homogène de ce sirop à la surface des produits et enfin une troisième étape de séchage par soufflage d'air chaud et sec, assurant l'évaporation de l'eau apportée par le sirop et donc la cristallisation du polyol appliqué.

On comprend alors très bien que ces procédés souffrent de façon générale de leur extrême lenteur. Ceci s'explique par le fait qu'il est obligatoire, faute d'observer une prise en masse des produits devant rester individualisés, de pulvériser un grand nombre de fois et de manière espacée dans le temps des quantités très faibles de sirop. Ces quantités sont de l'ordre de 10 à 30 grammes par kilogramme de produits à revêtir, ce qui correspond à une quantité apportée en polyol comprise entre 6 et 20 grammes par kilogramme de produits. Ainsi pour accroître le poids des articles de l'ordre de 20 %, plusieurs heures voire plusieurs jours sont nécessaires.

Certes, on remédie à ce grave inconvénient soit en augmentant la capacité des turbines de dragéification, soit en automatisant les installations en place de façon à écourter au maximum chacune des séquences de pulvérisation, de répartition et de séchage, soit encore en augmentant le parc industriel de turbines. On comprend fort bien que ces remèdes ne sont que très partiels car ils n'éliminent pas le problème à la source, et se traduisent forcément par des surcoûts non négligeables.

Un autre inconvénient de ces procédés réside dans le fait qu'ils manquent de souplesse. En effet, pour obtenir le résultat final recherché, il est obligatoire de procéder toujours de façon répétitive. L'automatisation, une fois mise en place, règle le problème, mais dans ce cas, il n'est possible de dragéifier aisément qu'un seul type de produit très particulier. En effet, les conditions de dragéification ne sont pas les mêmes et doivent par conséquent être revues, lorsque l'on souhaite revêtir par exemple des chewing-gums puis des comprimés ou bien encore deux chewing-gums de texture ou de forme différente.

Il existe une deuxième catégorie de procédés de dragéification aux polyols, qui allient l'emploi d'un sirop et celui d'une poudre. Il est à noter que le polyol présent majoritairement dans les sirops peut être ou non différent par nature du polyol présent à titre principal dans la poudre.

Cette catégorie de procédés, qui s'apparente plutôt à une dragéification tendre, diffère encore largement de l'invention décrite en détails ci-après de par la nature des polyols employés qui, comme l'homme du métier le sait, présentent plus de différences que de similitudes entre eux en ce qui concerne leurs propriétés physico-chimiques et organoleptiques.

De tels procédés sont très bien décrits dans la littérature. On retiendra en particulier les procédés dévoilés :
- par le brevet US 4 238 510 concernant un revêtement contenant de 45 % à 90 % de sorbitol ; l'enrobage des produits de confiserie est obtenu moyennant un séchage par air sec et chaud en turbine et application d'un sirop de polyol et d'un mélange de poudres de sorbitol et de mannitol. Ce procédé est toujours très long puisqu'il demande plusieurs journées. De plus, il manque également de souplesse car il ne permet de préparer que des revêtements de surface tendre, jamais durs et croustillants comme ils sont en général souhaités des consommateurs.
- par la demande de brevet FR 2 522 250 concernant un procédé de dragéification tendre caractérisé par l'application d'un sirop puis d'un mélange de poudrage comprenant un agent de dispersion, un constituant anti-adhésif, un constituant absorbant l'humidité et un agent édulcorant choisi dans le groupe constitué par le sorbitol, le xylitol, l'isomaltitol, le mannitol, le maltitol et les hydrolysats d'amidon hydrogénés,
- par la demande de brevet WO 91/09 989, concernant un enrobage par du sorbitol. Le procédé tel que décrit, bien qu'il ressemble à un procédé de dragéification tendre, ne se donne comme réel objectif que celui d'obtenir des couches dragéifiées hautement cristallines, dures et cassantes à la manière de celles décrites dans le brevet EP 37 407 de la Demanderesse citée plus haut. La nécessité de sécher lors de la dragéification mais également le fait qu'il soit impossible d'obtenir des couches tendres, font que le procédé, bien que susceptible de générer des gains de temps importants, n'est pas encore entièrement satisfaisant.
- par le brevet US 4 623 543 concernant des bonbons hypocaloriques enrobés avec du maltitol (ou maltose réduit). Il est préconisé de pulvériser à la surface des bonbons, un sirop de maltitol préparé éventuellement par dissolution dans l'eau de maltose réduit en poudre, puis de procéder à un séchage à une température de 40 à 55°C pendant 8 à 15 heures. Il est dit que du maltitol en poudre de fine granulométrie peut être employé dans le procédé juste avant le séchage, mais les quantités données dans l'exemple 1 sont si faibles, de l'ordre de 0,2 %, que le rôle de cette poudre pseudo-cristalline et impure ne doit sans doute se résumer qu'à celui d'une amorce de cristallisation. Il n'en demeure pas moins que le procédé tel que décrit est très long et reste par conséquent imparfait. Il est à noter par ailleurs, que ce document conforte l'homme du métier dans l'idée qu'un enrobage avec maltitol ne peut se réaliser que par emploi d'un procédé long et coûteux en énergie. Il tend donc à le détourner de l'emploi de maltitol.

Forte de ce constat, la Demanderesse s'est aperçue que l'on recherchait toujours à mettre au point un procédé d'enrobage, utilisant avantageusement les polyols en tant qu'agents de remplacement du sucre, qui n'aurait pas les inconvénients décrits ci-avant, c'est à dire présenterait tous les avantages suivants :
- celui d'être très rapide et de permettre de ce fait des gains de temps considérables et par conséquent des gains de capacité importants,
- celui d'être simple à mettre en place industriellement,
- celui d'être d'une grande souplesse, c'est à dire permettant d'une part d'obtenir aussi bien des couches dragéifiées tendres que des couches dures et croustillantes ou encore des couches constituées de microcristaux, et d'autre part de convenir à la dragéification de produits extrêmement variés,
- celui de permettre la préparation de produits dragéifiés de très haute qualité, non collants et n'évoluant pas en aspect ou en texture de manière significative au cours du temps.

C'est après avoir étudié précisément les propriétés de cristallisation du maltitol que la Demanderesse s'est aperçue qu'une poudre de maltitol de haute cristallinité pouvait être d'un grand intérêt dans les procédés d'enrobage aux polyols. C'est en reproduisant un procédé de dragéification tendre, par utilisation d'une poudre de maltitol cristallisée d'une pureté voisine de 99 %, associée à un sirop de maltitol contenant plus de 85 % de maltitol sur sec, que la Demanderesse a constaté que l'on obtenait, de façon surprenante et inattendue, des revêtements extrêmement durs et cassants, moyennant une attente avant conditionnement des produits de quelques heures seulement, ceci sans avoir besoin, contre toute attente, de procéder à des étapes telles que le séchage, longues et dispendieuses, contrairement à ce qu'il eût été logique de faire en suivant les recommandations données dans l'art antérieur pour tous les autres polyols, mais aussi le sucre, afin d'obtenir un tel résultat avec une telle rapidité.

Poursuivant ses travaux de recherche, la Demanderesse a constaté que la pureté de poudre employée était un facteur essentiel. En effet, bien que l'emploi d'une poudre de maltitol de faible pureté s'avère possible pour réaliser par association à un sirop, un revêtement tendre ou dur et vitreux, le résultat final est alors médiocre et les produits obtenus toujours collants. L'utilisation d'une poudre de maltitol de pureté supérieure à 87 % solutionne le problème.

Par ailleurs, lorsque l'on désire obtenir à la surface d'un produit un revêtement dur et croustillant par association d'un sirop et d'une poudre de maltitol, seule la combinaison d'une poudre de très haute pureté et d'un sirop très riche en maltitol relativement à sa matière sèche, s'avère satisfaisante.

La présente invention concerne donc un procédé d'enrobage au maltitol permettant la création d'un revêtement à la surface d'un produit, comportant, outre l'application d'un sirop de carbohydrate, d'un sirop de protéine ou de vapeur, l'application sous forme pulvérulente d'une quantité de poudre de maltitol caractérisé par le fait que le maltitol a une pureté supérieure à 87 %.

Pour mesurer la pureté de cette poudre, on procédera à une chromatographie liquide haute performance dans des conditions usuelles de mesure.

D'autres poudres, autres que celle de maltitol, pourront être employées dans le procédé conforme à l'invention bien que cela ne soit pas en général utile. Au cas où un mélange de polyols pulvérulents viendrait à être utilisé, la poudre de maltitol sera employée à titre principal et représentera de préférence plus de 70 % du mélange.

La quantité de maltitol poudre de haute pureté, appliquée selon le procédé, représentera toujours au moins 5 %, de préférence au moins 15 % de la masse du revêtement des produits tels qu'ils sont destinés à être commercialisés. Cette quantité de maltitol poudre variera plus préférentiellement de 20 à 99,5 % selon le type d'enrobage préparé.

Selon le mode général préféré de l'invention, les produits à revêtir seront soumis à un mouvement de rotation dans une turbine de dragéification. Celle-ci pourra avoir une forme ordinaire, c'est à dire une forme en tulipe avec un axe de révolution incliné ou bien une forme cylindrique avec un axe horizontal. Les produits, de préférence alors toujours dépoussiérés, antérieurement ou postérieurement à leur introduction dans la turbine, présenteront de préférence une forme sphérique, cylindrique ou ovale afin de faciliter l'opération d'enrobage mais pourront tout aussi bien avoir une forme de coussinet ou de pastille.

Le procédé conforme à l'invention permet de réaliser, de façon aisée et rapide, des revêtements d'une haute stabilité et d'une grande variété c'est à dire ou bien tendres, ou bien durs et croustillants, ou bien encore durs et vitreux, ou enfin composés de micro-cristaux. A ce titre, il est d'une très grande souplesse. Il suffit pour cela de faire varier la richesse en maltitol du sirop utilisé, la pureté de la poudre de maltitol et le rapport entre les quantités de poudre et de sirop appliqués. D'autres paramètres comme la vitesse d'enrobage, la ventilation ou non d'air, sont certes importants mais à un degré moindre.

Par exemple, lorsque l'on emploie une poudre d'une pureté plutôt faible, comprise entre 87 et 95 %, il est possible d'obtenir des couches relativement dures et croustillantes dans la mesure où un sirop particulièrement riche en maltitol y est associé.

Ceci étant, le maximum de flexibilité est obtenu pour le procédé conforme à l'invention par utilisation d'une poudre de maltitol ayant une pureté supérieure à 90 % et de préférence supérieure à 95 %, l'idéal étant de choisir dans tous les cas une poudre de maltitol ayant une pureté supérieure à 98 %, voire si possible 99 %.

Le procédé conforme à l'invention permet d'enrober des produits très divers. Il peut s'agir de produits alimentaires comme par exemple des confiseries telles que des chewing-gums, des comprimés, des lozenges, des gelées, des oeufs liqueur, des pâtes à mâcher, des bonbons durs, des produits chocolatés, des céréales pour petit déjeuner, mais aussi des produits pharmaceutiques ou vétérinaires comme les pilules, les tablettes, des produits pour animaux, des produits diététiques tels que les granulés de plantes, des semences ou des graines, des poudres d'engrais agglomérées ou encore des additifs à base d'enzymes ou de microorganismes destinés en particulier à la fabrication de denrées alimentaires comme le pain ou les produits industriels comme les lessives, les additifs pulvérulents composés de vitamines, d'arômes, de parfums, d'acides, d'édulcorants ou de principes actifs divers.

Selon un mode général de réalisation de l'invention, le procédé consiste à humidifier de façon homogène la surface des produits à l'aide de vapeur, de préférence sèche, ou à l'aide d'un sirop de carbohydrate ou de protéine et à les mettre en mouvement. On ajoute ensuite sous forme pulvérulente une quantité de poudre de maltitol de haute pureté. Après répartition de la poudre, un nouveau cycle humidification-apport de poudre peut être réalisé. Dans ce cas, le second cycle sera de préférence espacé de quelques minutes du premier cycle afin de permettre l'assèchement de la surface des produits. Rien n'empêche de faciliter cet assèchement par un flux d'air sec. Par contre, il n'est très généralement pas nécessaire de soumettre les produits après enrobage à un séchage en étuve ou en salle conditionnée contrairement à ce qui est réalisé d'ordinaire pour les polyols, de sorte que des gains de temps et d'énergie sont encore à ce niveau possibles. Il est à noter que le procédé conforme à l'invention nécessite au moins une, mais de préférence deux applications, sous forme pulvérulente, d'une poudre de maltitol de haute pureté. Ces applications peuvent être réalisées lors d'un même cycle ou bien lors de cycles différents sachant qu'un cycle est défini dans la présente invention comme ne comprenant qu'une seule application d'un sirop de carbohydrate ou de protéine ou qu'une seule application de vapeur.

Selon un autre mode général de réalisation, la vapeur ou le sirop de carbohydrate ou de protéine sont appliqués sur les produits placés dans une turbine, laquelle contient également une quantité de poudre de maltitol de haute pureté.

Les sirops de carbohydrate utilisables dans le procédé à l'invention, présenteront une composition dont la nature sera choisie en fonction du type d'enrobage souhaité. Il s'agira en particulier de sirops de maltitol ou de sirops de saccharides faiblement caloriques. Ces derniers seront des composés ayant une valeur calorique inférieure à celle du sucre et pourront être choisis parmi les sucre-alcools autres que le maltitol, les polydextroses, les oligofructoses, les dextrines, les matières cellulosiques, les gommes arabiques et les pectines. Les sirops obtenus par mélange de maltitol et de saccharides peu caloriques cités ci-dessus pourront également convenir.

En ce qui concerne les sirops de protéines, on préférera les sirops de gélatine d'os ou de peau. Ces sirops seront de préférence mélangés aux sirops de carbohydrates définis ci-avant dans le cas où l'emploi de ces deux sirops s'avère nécessaire. Ainsi, l'utilisation des sirops de protéines s'en trouve facilitée.

Le procédé conforme à l'invention dans son mode général est toujours nettement plus court que les procédés de l'art antérieur. En général, la durée totale d'enrobage n'excédera jamais 5 heures. Par exemple, des taux de grossissage très élevés voisins de 50 % pourront être obtenus en moins de trois heures. Pour des taux plus faibles, de l'ordre de 20 %, il faudra compter au maximum un temps inférieur de moitié, et en général, 1 heure environ.

Selon un premier mode, le procédé d'enrobage est un procédé de gommage dans lequel on utilise pour ce faire, des sirops contenant moins de 85 % de maltitol par rapport à leurs matières sèches solubles. En particulier, certains sirops de glucose hydrogénés pauvres en maltitol tout comme les sirops de saccharides définis ci-avant conviennent. Leurs matières sèches seront dès lors comprises entre 20 et 50 %, de préférence.

Les quantités ordinaires de sirop, utilisées lors d'un cycle, seront alors de l'ordre de 2 à 15 millilitres par kilogramme de produits à revêtir. En général, un à trois cycles seront suffisants.

En ce qui concerne la quantité de poudre de maltitol de haute pureté à employer, des fractions unitaires de l'ordre de 20 à 30 g par kilogramme de produits à revêtir seront conseillées. Dans tous les cas, on préférera utiliser des poudres fines, présentant moins de 10 % de particules de diamètre supérieur à 250 microns et moins de 10 % de particules de diamètre inférieur à 40 microns . Une poudre idéale aura un diamètre moyen compris entre 80 et 100 microns.

Les revêtements obtenus conformément à ce premier mode de réalisation sont d'une grande qualité. En particulier, leur adhérence aux produits revêtus est excellente et nettement améliorée par rapport à celle que l'on obtiendrait par emploi de sorbitol pulvérulent dans des conditions similaires. Ces revêtements, durs et vitreux, contiennent de préférence de 60 à 95 % de maltitol. La quantité de poudre de maltitol apportée sous forme pulvérulente peut atteindre 80 à 95 % du revêtement final obtenu. Enfin le taux de grossissage normal est de 2 à 5 % environ.

Selon un second mode de réalisation, le procédé d'enrobage est un procédé de dragéification tendre, éventuellement précédé d'un gommage, permettant l'obtention d'un revêtement tendre et non collant contenant de 20 à 95 % de maltitol. La quantité de maltitol appliquée sous forme pulvérulente, par fractions unitaires de 20 à 90 grammes par kilogramme de produits à enrober lors d'un ou plusieurs cycles, représente dans ce cas au total 80 à 95 % environ du revêtement des produits tels que destinés à la commercialisation.

On emploie dans ce cas comme dans le cas précédent, des sirops contenant moins de 85 % de maltitol et de préférence de 10 à 75 % de maltitol ou plus préférentiellement encore entre 65 et 75 %. Les sirops de saccharides faiblement caloriques décrits ci-dessus conviennent également. Ces sirops pour être idéaux contiendront par ailleurs de 0,5 à 5 % de gélatine.

Les quantités de sirop pulvérisées seront selon ce mode particulier en général de l'ordre de 10 à 35 millilitres par kilogramme de produit. De préférence, la matière sèche de ces sirops sera comprise entre 50 et 85 %. Le nombre de cycle nécessaire, pour parvenir à un taux de grossissage compris entre 10 et 80 %, sera de 1 à 20.

La température du sirop sera en général celle de l'ambiance, mais afin d'obtenir une grande régularité de la répartition du sirop, on pourra choisir une température plus élevée permettant d'abaisser à moins de 300 centipoises la viscosité du sirop de revêtement.

Dans des conditions normales, il ne sera pas nécessaire de prévoir un séchage par étuvage ou en salle conditionnée. Au besoin, et seulement afin d'obtenir des couches légèrement plus dures, un flux d'air sec pourra être maintenu entre les différents cycles. Ainsi, le procédé sera toujours très rapide.

En final, un lissage pourra permettre d'améliorer l'aspect des produits. L'utilisation de corps gras ou de cires visant à imperméabiliser le revêtement tout en améliorant son aspect visuel pourra également être envisagée.

Selon un troisième mode de réalisation, le procédé d'enrobage permet la préparation d'un revêtement formé d'une pluralité de micro-cristaux de maltitol et composé de 95 à 99,5 % de maltitol. Il s'agira alors d'un sucrage. Les produits seront humidifiés à la vapeur ou bien par un sirop de maltitol contenant moins de 85 % de maltitol.

Cette humidification pourra être réalisée avant, pendant ou après application, sous forme pulvérulente à la surface des produits, d'une quantité de maltitol de haute pureté de l'ordre de 50 à 250 grammes par kilogramme de produits à revêtir. Le nombre de cycles ne sera en général que d'un et le taux de grossissage sera normalement compris entre 7 et 15 %.

Il est à noter que contrairement aux autres modes de réalisation de l'invention, on retiendra ici pour la poudre de maltitol, une granulométrie grossière. Le diamètre moyen de celle-ci sera de 300 à 1500 microns selon le résultat recherché. Par ailleurs, plus encore que dans les deux modes précédents, on retiendra ici de préférence une poudre de très haute cristallinité et de très haute pureté, l'idéal étant d'utiliser une poudre présentant une pureté supérieure à 98 %.

Selon un quatrième mode, le procédé conforme à l'invention est mis en oeuvre comme décrit ci-dessous pour obtenir un revêtement dur et croustillant. Le procédé pourra être alors un givrage, une dragéification dure ou un lissage.

On utilisera toutefois toujours dans ce cas un sirop de carbohydrate contenant plus de 85 %, de préférence plus de 90 % et plus préférentiellement encore plus de 95 % de maltitol ; ces taux étant calculés par rapport à la matière sèche soluble. De préférence, ces sirops seront préparés à partir d'une poudre de maltitol ayant une pureté supérieure à 85 % comme celle utilisée sous forme pulvérulente, et d'une gélatine. Celle-ci représentera alors 0,5 à 5 % de la matière sèche du sirop employé.

Le nombre de cycles nécessaires pour enrober les produits sera de 1 à 10 pour une dragéification dure, de 1 à 3 pour un lissage et de 1 à 5 pour un givrage. Chaque cycle comportera la pulvérisation de 5 à 35 millilitres d'un sirop ayant une matière sèche comprise entre 50 et 85 % dans le cas d'un givrage ou d'une dragéification dure, et la pulvérisation de 15 à 50 millilitres d'un sirop de matière sèche comprise entre 40 et 60 % dans le cas d'un lissage. Ces quantités, correspondant aux quantités utiles lors de chaque cycle pour enrober un kilogramme de produit, variera selon la nature de ce dernier et en particulier selon sa porosité. On préférera apporter à la surface des produits un sirop chaud de façon à favoriser le départ d'eau. Un simple soufflage avec un air sec pourra éventuellement permettre de faciliter ce départ d'eau. Les quantités de poudre de maltitol, apportées durant un ou plusieurs cycles, seront en général comprises entre 5 et 70 grammes par kilogramme de produits à revêtir, les valeurs les plus faibles étant préférées lors d'un lissage.

On retiendra que le taux de maltitol dans les revêtements atteindront 95 à 99,5 %, de préférence 98 à 99,5 % dans le cas d'un givrage ou d'une dragéification dure et que ce taux sera seulement supérieur à 80 % dans le cas d'un lissage.

En ce qui concerne la quantité de poudre de maltitol apportée sous forme pulvérulente dans les revêtements de produits tels que destinés à la commercialisation, celle-ci représentera en général 65 à 90 % pour un givrage et une dragéification dure, et 40 à 80 % pour un lissage.

La mise en oeuvre de l'invention selon le quatrième mode tel que décrit ci-dessus permet d'obtenir des produits ayant un revêtement croustillant après quelques heures de stockage avant emballage. Il n'est pas forcément nécessaire de procéder à un étuvage. Il est à noter par ailleurs, que la couche obtenue dans ce cas est d'une extrême blancheur sans même à avoir à ajouter des agents de blanchiment, tels que le bioxyde de titane ou la carbonate de calcium, toujours d'ordinaire nécessaires avec les autres polyols et le sucre.

L'invention concerne également en tant que produit nouveau un revêtement de surface visant à protéger ou embellir un produit, constitué d'au moins 5 %, de préférence au moins de 15 % et plus préférentiellement de 20 à 99,5 % de poudre de maltitol ayant une pureté supérieure à 87 %, de préférence supérieure à 90 %, plus préférentiellement supérieure à 95 % et encore plus préférentiellement supérieure à 98 %.

Les moyens de mise en oeuvre du procédé conforme à l'invention décrits ci-dessus ne sont point limitatifs et ne se veulent seulement que relatifs à des moyens de réalisation avantageux et préférés. La flexibilité et la rapidité d'exécution du procédé ainsi que ses multiples autres avantages listés plus haut, pourront probablement être mieux appréhendés à la lumière des exemples qui suivent.

### EXEMPLE I

### Procédé de gommage avec application sous forme pulvérulente d'une quantité de poudre de maltitol de très haute pureté.

### 1. Produits employés.

On procède au gommage de gelées (appelées "jelly beans" aux Etats-Unis) contenant des polyols à titre de remplacement du sucre et du sirop de glucose.

Celles-ci présentent la composition suivante :

| | |
|---|---|
| - Sirop de maltitol LYCASIN^{R} 80/55 | 82,0 % |
| - Sorbitol poudre NEOSORB^{R} P100 | 2,0 % |
| - Pectine RUBAN^{R} JAUNE CS | 1,2 % |
| - Acide citrique | 0,8 % |
| - Eau | 14,0 % |

Le gommage est réalisé par emploi :
- d'une solution de gomme arabique à 32 % de matière sèche, préparée à partir d'une gomme vendue par la Société IRANEX.
- d'une poudre fine de maltitol de pureté supérieure à 99 %, ayant une granulométrie telle que le diamètre moyen des particules soit de 100 microns environ, et obtenue par tamisage d'une poudre de maltitol commercialisée par la Demanderesse sous la marque MALTISORB^{R} cristallisé.

### 2. Conditions et résultats.

Un kilogramme de gelées est introduit dans une turbine de dragéification en forme de tulipe avec un axe oblique de 45 degré. La turbine est mise en mouvement de rotation à une vitesse de 20 tours/minutes.

On pulvérise à la surface des gelées 3 grammes de la solution de gomme arabique puis on ajoute 5 grammes de poudre fine de maltitol de haute pureté. On laisse ensuite sécher le revêtement obtenu pendant quelques minutes. Ceci constitue un premier cycle d'enrobage.

On répète ensuite trois fois le cycle précédent. Lors du dernier cycle, on procède à une ventilation par un flux d'air froid et sec à un débit de 150 mètres cube/heure pendant 10 minutes.

La durée totale du procédé d'enrobage est de 60 minutes environ pour un taux de grossissage voisin de 5 %.

La teneur en poudre de maltitol apportée uniquement sous forme pulvérulente pour obtenir ce revêtement dur et vitreux, est de l'ordre de 82 %.

L'adhérence du revêtement obtenu à la surface des gelées est excellente, bien que les gelées soient tendres. Un tel résultat ne peut pas s'obtenir avec du sorbitol poudre d'une pureté et d'une granulométrie identique à celle de la poudre de maltitol employée ici.

### EXEMPLE II

### Procédé de dragéification tendre avec application sous forme pulvérulente d'une quantité de maltitol de très haute pureté.

### 1. Produits employés.

Dans cet exemple, on utilise des comprimés durs au sorbitol, de forme ovoïde.

Le sirop d'enrobage employé est préparé par mélange d'un sirop de maltitol à raison de 90 %, et d'un sirop de gélatine à raison de 10 %.

Le sirop de maltitol utilisé est un sirop commercialisé par la Demanderesse sous la marque MALTISORB^{R} 75/75 contenant 75 % de maltitol par rapport à sa matière sèche et comprenant 25 % d'eau par rapport à son état commercial.

Le sirop de gélatine est préparé, à 20 % de matière sèche à partir d'une gélatine commercialisée sous l'appellation gélatine AT 700 par la Société SANOFI BIO-INDUSTRIES.

Le sirop d'enrobage ainsi préparé est dilué à 60 % de matière sèche.

Quatre produits en poudre sont utilisés dans cet exemple en association avec le sirop d'enrobage :
- la première est la poudre fine de maltitol de très haute pureté décrite dans l'exemple I,
- la seconde est une poudre de même granulométrie, non commercialisée, présentant une pureté en maltitol de 92 %, le reste de sa composition sèche étant essentiellement constitué de sorbitol et de maltotriitol.
- la troisième poudre est une poudre commerciale vendue sous le nom de MALBIT^{R} CR. Elle ne contient que 87 % de maltitol. Elle a été tamisée pour obtenir une granulométrie très voisine à la première poudre.
- la quatrième poudre est en fait un mélange pulvérulent comprenant :
   . 70 % de poudre fine de maltitol de haute pureté,
   . 15 % de mannitol SP commercialisé par la Demanderesse,
   . 10 % de carbonate de calcium en poudre,
   . 5 % de dioxyde de titane en poudre.

Les deux dernières poudres se placent aux limites de l'invention et elles sont utilisées afin de bien appréhender les problèmes relatifs à l'emploi d'une poudre de maltitol insuffisamment pure.

Il est à remarquer que la quatrième poudre ci-dessus correspond à un mélange dont les proportions sont données dans le brevet US 4.238.510 et dans laquelle la Demanderesse, bien que cela ne soit nullement envisagé ou suggéré dans le brevet, a remplacé la poudre de sorbitol cristallisé par du maltitol cristallisé de très haute pureté et de fine granulométrie.

### 2. Conditions de la dragéification tendre

Un demi-kilogramme de comprimés sont introduits dans la turbine de l'exemple I.

Le sirop d'enrobage est appliqué une première fois à une température de 50°C sur les comprimés en mouvement, à raison de 5 millilitres.

Après 2 ou 3 minutes environ, 30 grammes de poudre fine de maltitol de très haute pureté de l'exemple I sont ajoutés. On laisse s'écouler un temps pour la répartition de 3 minutes environ.

Ce cycle est répété neuf fois avec la même poudre et le même sirop de revêtement, en augmentant les cadences mais aussi en augmentant progressivement la quantité de poudre de maltitol jusqu'à 90 grammes et la quantité de sirop jusqu'à 20 grammes, pour la dernière charge.

En final, on obtient un poids de comprimés dragéifiés légèrement supérieur à 1000 grammes de sorte que le taux de grossissage obtenu est de 50 % en moins d'une heure.

Les conditions ci-dessus sont reproduites exactement, avec les trois autres poudres.

On observe que l'on obtient des produits plus collants et un enrobage moins régulier avec la poudre n'ayant qu'une pureté de 87 % en maltitol.

### 3. Caractéristiques des produits obtenus.

Les produits sont analysés et testés quelques jours après dragéification.

### - Données analytiques :

La teneur en eau des comprimés s'avère être en lien direct avec la nature de la poudre de maltitol utilisée. Cette teneur est supérieure à 4 % dans le cas des comprimés préparés avec la poudre de maltitol la plus impure et proche de 3,2 % pour la poudre de maltitol de très haute pureté.

La teneur totale en maltitol du revêtement qui approche 90 % dans le cas de l'emploi de la poudre de maltitol de très haute pureté n'est que de 78 % environ lors de l'emploi du produit à base de MALBIT^{R} CR et seulement de 65 % environ pour le mélange pulvérulent contenant du dioxyde de titane, du mannitol et du carbonate de calcium.

### - Données organoleptiques.

Les produits dragéifiés avec la poudre de maltitol à 99 % minimum de pureté sont les plus blancs, suivis de ceux préparés avec la poudre de maltitol à 92 % de pureté et de ceux avec la poudre MALBIT^{R} CR. Les produits les plus grisâtres sont ceux préparés avec le mélange pulvérulent.

Les textures sous la dent des différentes dragées sont appréciées par un jury de dégustation de 7 personnes par un test en aveugle. Les revêtements des dragées préparées avec les poudres les plus impures (MALBIT^{R} CR et mélange pulvérulent à 70 % de maltitol de haute pureté) sont jugés inacceptables car trop mous. Les deux autres gelées sont jugées très satisfaisantes.

Au niveau du goût, les produits sont d'autant plus appréciés qu'ils contiennent des teneurs élevées en maltitol.

### EXEMPLES III

### Procédé de dragéification dure avec application sous forme pulvérulente d'une quantité de poudre de très haute pureté.

### 1. Produits employés.

Des chewing-gums, formulés aux polyols c'est à dire avec un sirop LYCASIN^{R} 80/55 et du sorbitol poudre NEOSORB^{R} P60 et ayant une forme en coussinet de 2 centimètres de longueur pour 1 centimètre de largeur environ, sont dragéifiés selon le procédé conforme à l'invention pour obtenir des revêtements durs et croustillants.

A titre de comparaison, les mêmes produits sont dragéifiés au maltitol selon le procédé décrit dans le brevet EP 201.412 de la Demanderesse.

On utilise dans le premier cas, pour réaliser l'invention :
- un sirop de maltitol ayant une matière sèche de 70 % obtenu par dissolution de maltitol de très haute pureté commercialisé sous la marque MALTISORB^{R} cristallisé. On ajoute à ce sirop 2 % de gélatine par rapport à sa matière sèche. Ce sirop est utilisé à 60°C.
- et une poudre fine de maltitol de très haute pureté telle que définie dans l'exemple I.

Dans le deuxième cas, on utilise uniquement le sirop de maltitol ci-dessus, dilué à 60 % de matière sèche. Sa température d'emploi est de 45°C comme décrit dans le brevet ci-dessus.

### 2. Conditions

Pour réaliser l'enrobage dur et croustillant de l'invention, on place un kilogramme de coussinets de chewing-gums dans une drageuse en rotation.

Le sirop de maltitol est appliqué une première fois à raison de 15 millilitres. On ajoute après une ou deux minutes une quantité de 30 grammes de poudre de maltitol. On laisse sécher la surface des coussinets pendant une minute sans procéder à un séchage forcé.

Ce cycle est répété cinq fois, en augmentant les cadences d'application et les quantités apportées. Lors du dernier cycle, la quantité de sirop apportée est de 35 millilitres tandis que celle de poudre est de 50 grammes.

En final, il est possible, sans que ceci soit obligatoire, de soumettre les coussinets à une ventilation d'une quinzaine de minutes pour aider au séchage du revêtement. La durée totale de la dragéification est de 45 minutes environ, pour un taux de grossissage de 20 %

Dans le second cas, c'est à dire celui dans le brevet EP 201.412, 60 cycles au moins doivent être réalisés de sorte que la durée de la dragéification est très longue puisqu'elle nécessite 6 heures à 8 heures pour obtenir le même taux de grossissage.

Un gain de temps très important est obtenu en appliquant le procédé conforme à l'invention, de sorte que pour un temps donné, une quantité 6 à 7 fois plus grande de produits peuvent être dragéifiés selon le procédé conforme à l'invention par rapport à ceux de l'art antérieur. Les dépenses énergétiques sont également plus faibles.

### 3. Caractéristiques des produits obtenus

Les croustillances et les duretés des revêtements des deux types de produits ci-dessus sont comparées 1 jour et 7 jours après fabrication.

Le jury décèle une légère différence à 1 jour, le revêtement selon l'invention paraissant légèrement moins dur sous la dent. Après une semaine, cette différence n'est plus décelée et les produits sont jugés tout à fait identiques.

### EXEMPLE IV

### Procédé de givrage avec application sous forme pulvérulente de poudre de maltitol de très haute pureté.

### 1. Produits employés et conditions.

On procède au givrage avec maltitol de sucres cuits obtenus suite à une cuisson d'un mélange de sirop de LYCASIN^{R} 80/55 et de mannitol.

Pour cela, on prépare une solution de gomme arabique à 40 % de matière sèche. Celle-ci est maintenue à 40°C.

On introduit les sucres cuits dans une turbine de dragéification en rotation, puis on verse 25 millilitres du sirop de gomme arabique en surface des bonbons. Après quelques minutes, on ajoute 100 g de poudre fine de maltitol de très haute pureté telle que décrite dans l'exemple I.

On insuffle ensuite dans la turbine de l'air chaud avant de procéder éventuellement à un nouveau cycle d'enrobage selon des conditions strictement identiques.

### 2. Stabilité.

La stabilité des sucres cuits givrés est comparée à celle des mêmes sucres cuits non givrés dans un test de reprise en eau, consistant à relever au cours du temps les variations de poids des produits placés dans des conditions d'humidité très élevée (75 % d'humidité relative) à 20°C.

Il apparaît dans ce test sévère, que les produits givrés sont nettement moins sensibles à l'humidité puisqu'ils reprennent en surface environ 30 % d'eau en moins par rapport aux sucres cuits témoins.

### EXEMPLE V

### Procédé de sucrage avec application sous forme pulvérulente d'une quantité de poudre de maltitol de très haute pureté.

### 1. Matières utilisées

On procède au sucrage de gommes dures formulées par emploi de polyols.

On utilise pour cela une poudre obtenue par tamisage de cristaux de maltitol de pureté de 99,5 %.

La coupe granulométrique retenue est celle comprise entre 300 et 800 microns.

On utilise par ailleurs de la vapeur sèche pour humidifier la surface des gommes.

### 2. Conditions et résultats.

On verse 200 g de cristaux de maltitol sélectionnés comme ci-dessus dans une turbine de dragéification, puis 1 kilogramme environ de gommes dures préalablement humidifiées.

L'enrobage se réalise par mise en rotation de la turbine. Après une dizaine de minutes, les produits sont retirés de la turbine puis stockés à l'air libre durant quelques heures avant d'être conditionnés.

Les produits finaux présentent une jolie surface, très attractive.

## Revendications

1. Procédé d'enrobage au maltitol, permettant la création d'un revêtement à la surface d'un produit, comportant, outre l'application d'un sirop de carbohydrate, d'un sirop de protéine ou de vapeur, l'application sous forme pulvérulente d'une quantité de poudre de maltitol caractérisé par le fait que le maltitol a une pureté supérieure à 87 %.

2. Procédé d'enrobage selon la revendication 1, caractérisé en ce que la quantité de poudre de maltitol représente au moins 5 %, de préférence 15 % et plus préférentiellement encore de 20 à 99,5 % du revêtement des produits destinés à la commercialisation.

3. Procédé d'enrobage selon la revendication 1, caractérisé en ce que la poudre de maltitol appliquée présente une pureté supérieure à 90 %, de préférence supérieure à 95 % et plus préférentiellement supérieure à 98 %.

4. Procédé d'enrobage selon la revendication 1, caractérisé en ce que le produit à revêtir est un produit alimentaire, un produit pour animaux, un produit pharmaceutique ou vétérinaire, un produit diététique, une semence ou une graine, une poudre d'engrais ou encore un additif à base d'enzymes, de microorganismes, de vitamines, d'arômes, de parfums, d'acides, d'édulcorants ou de principes actifs.

5. Procédé d'enrobage selon la revendication 1 caractérisé en ce qu'un sirop de carbohydrate contenant moins de 85 % de maltitol par rapport à sa matière sèche soluble est appliqué ; ce sirop de carbohydrate étant de préférence un sirop contenant de 10 à 75 % de maltitol ou un sirop de saccharides faiblement caloriques tels que les sucre-alcools autres que le maltitol, les polydextroses, les oligofructoses, les dextrines, les matières cellulosiques, les gommes arabiques et les pectines.

6. Procédé d'enrobage selon la revendication 5 caractérisé en qu'il permet l'obtention d'un revêtement dur et vitreux contenant de préférence de 60 à 95 % de maltitol, et en ce qu'il consiste en un gommage.

7. Procédé d'enrobage selon la revendication 5 caractérisé en ce qu'il permet l'obtention d'un revêtement tendre contenant de préférence de 20 à 95 % de maltitol, et en ce qu'il consiste en une dragéification tendre, éventuellement précédée d'un gommage.

8. Procédé d'enrobage selon la revendication 1 ou 5, caractérisé en ce qu'il permet la préparation d'un revêtement formé d'une pluralité de micro-cristaux et composé de 95 à 99,5 % de maltitol et en ce qu'il consiste en un sucrage, éventuellement précédé d'un gommage.

9. Procédé d'enrobage selon la revendication 1, caractérisé en ce qu'un sirop de carbohydrate contenant plus de 85 % de maltitol par rapport à sa matière sèche soluble est appliqué ; ce sirop de carbohydrate étant de préférence préparé par dissolution d'une poudre de maltitol ayant une pureté supérieure à 87 %.

10. Procédé d'enrobage selon la revendication 9, caractérisé en ce qu'il permet la préparation d'un revêtement dur et croustillant contenant de préférence de 95 à 99,5 % de maltitol, et en ce qu'il consiste en un givrage, une dragéification dure ou un lissage, éventuellement précédé(e) d'un gommage.

11. Revêtement de surface visant à protéger ou embellir un produit, constitué d'au moins 5 %, de préférence d'au moins 15 % et plus préférentiellement de 20 à 99,5 % de poudre de maltitol ayant une pureté supérieure à 87 %, de préférence supérieure à 90 %, et plus préférentiellement encore supérieure à 95 %.

## Claims

1. Process for coating with maltitol making it possible to create a coating on the surface of a product, comprising besides the application of a carbohydrate syrup, of a protein syrup or of steam, the application in pulverulent form of a quantity of maltitol powder, characterized in that the maltitol has a purity higher than 87%.

2. Coating process according to Claim 1, characterized in that the quantity of maltitol powder represents at least 5%, preferably 15% and still more preferably from 20 to 99.5% of the coating for products intended for marketing.

3. Coating process according to Claim 1, characterized in that the maltitol powder applied has a purity higher than 90%, preferably higher than 95% and more preferably higher than 98%.

4. Coating process according to Claim 1, characterized in that the product to be coated is an alimentary product, a product for animals, a pharmaceutical or veterinary product, a dietetic product, a seed or a grain, a fertilizer powder or else an additive based on enzymes, microorganisms, vitamins, flavours, perfumes, acids, sweeteners or active principles.

5. Coating process according to Claim 1, characterized in that a carbohydrate syrup containing less than 85% of maltitol in relation to its soluble dry matter content is applied; this carbohydrate syrup being preferably a syrup containing from 10 to 75% of maltitol or a syrup of low-calorie saccharides such as the alcohol-sugars other than maltitol, polydextroses, oligofructoses, dextrins, cellulose-based substances, gum arabic and pectins.

6. Coating process according to Claim 5, characterized in that it makes it possible to obtain a hard and vitreous coating preferably containing from 60 to 95% of maltitol, and in that it consists of a gumming.

7. Coating process according to Claim 5, characterized in that it makes it possible to obtain a soft coating preferably containing from 20 to 95% of maltitol, and in that it consists of a soft coating operation, optionally preceded by a gumming.

8. Coating process according to Claim 1 or 5, characterized in that it makes it possible to prepare a coating formed by a plurality of microcrystals and composed of 95 to 99.5% of maltitol, and in that it consists of a sanding operation, optionally preceded by a gumming.

9. Coating process according to Claim 1, characterized in that a carbohydrate syrup containing more than 85% of maltitol in relation to its soluble dry matter content is applied, this carbohydrate syrup being preferably prepared by dissolving a maltitol powder which has a purity higher than 87%.

10. Coating process according to Claim 9, characterized in that it makes it possible to prepare a hard and crunchy coating preferably containing from 95 to 99.5% of maltitol, and in that it consists of a frosting, a hard coating or a smoothing operation, optionally preceded by a gumming.

11. Surface coating intended to protect or embellish a product, consisting of at least 5%, preferably of at least 15% and more preferably from 20 to 99.5% of maltitol powder which has a purity higher than 87%, preferably higher than 90% and still more preferably higher than 95%.

## Patentansprüche

1. Verfahren zur Umhüllung mit Maltitol, das die Bildung einer Beschichtung an der Oberfläche eines Produktes ermöglicht, umfassend außer der Anwendung eines Kohlenhydrat-Sirups, eines Proteinsirups oder Dampf die Verwendung in Pulverform einer Menge von Maltitol-Pulver, dadurch gekennzeichnet, daß das Maltitol eine Reinheit von über 87 % aufweist.

2. Verfahren zur Umhüllung nach Anspruch 1, dadurch gekennzeichnet, daß die Menge an Maltitol-Pulver mindestens 5 %, vorzugsweise 15 % und noch bevorzugter 20 % bis 99,5 % der Beschichtung des für den Handel vorgesehenen Produktes darstellt.

3. Verfahren zur Umhüllung nach Anspruch 1, dadurch gekennzeichnet, daß das aufgebrachte Maltitol-Pulver eine Reinheit von über 90 %, vorzugsweise von über 95 % und noch bevorzugter von über 98 % aufweist.

4. Verfahren zur Umhüllung nach Anspruch 1, dadurch gekennzeichnet, daß das zu umhüllende Produkt ein Nahrungsmittelprodukt, ein Produkt für Tiere, ein pharmazeutisches oder Veterinär-Produkt, ein diätetisches Produkt, ein Samen oder ein Korn, ein Düngemittel-Pulver oder auch ein Zusatzstoff auf der Basis von Enzymen, Mikroorganismen, Vitaminen, Aromen, Duftstoffen, Säuren, Süßstoffen oder Wirkstoffen ist.

5. Verfahren zur Umhüllung nach Anspruch 1, dadurch gekennzeichnet, daß ein Kohlenhydrat-Sirup verwendet wird, der mindestens 85 % Maltitol, bezogen auf seine lösliche Trockensubstanz enthält, wobei dieser Kohlenhydrat-Sirup vorzugsweise ein Sirup, der 10 % bis 75 % Maltitol enthält oder ein Sirup von an Kalorien armen Zuckern ist, wie die von Maltitol verschiedenen Zuckeralkohole, die Polydextrosen, die Oligofructosen, die Dextrine, die Cellulosestoffe, die Gummi arabicum und die Pektine.

6. Verfahren zur Umhüllung nach Anspruch 5, dadurch gekennzeichnet, daß es die Herstellung einer harten und glasartigen Beschichtung ermöglicht, die vorzugsweise 60 % bis 95 % Maltitol enthält, und daß es aus einer Gummierung besteht.

7. Verfahren zur Umhüllung nach Anspruch 5, dadurch gekennzeichnet, daß es die Herstellung einer weichen Beschichtung ermöglicht, die vorzugsweise 20 % bis 95 % Maltitol enthält, und daß es aus einer weichen Dragierung besteht, der gegebenenfalls eine Gummierung vorausgeht.

8. Verfahren zur Umhüllung nach Anspruch 1 oder 5, dadurch gekennzeichnet, daß es die Herstellung einer Beschichtung ermöglicht, die von einer Vielzahl von Mikrokristallen gebildet wird und zusammengesetzt ist aus 95 % bis 99,5 % Maltitol, und daß es aus einem Zuckern besteht, dem gegebenenfalls eine Gummierung vorausgeht.

9. Verfahren zur Umhüllung nach Anspruch 1, dadurch gekennzeichnet, daß ein Kohlenhydrat-Sirup verwendet wird, der mehr als 85 % Maltitol, bezogen auf seine lösliche Trockensubstanz enthält, wobei dieser Kohlenhydrat-Sirup vorzugsweise durch Auflösen eines Maltitol-Pulvers mit einer Reinheit von über 87 % hergestellt wird.

10. Verfahren zur Umhüllung nach Anspruch 9, dadurch gekennzeichnet, daß es die Herstellung einer harten und knusprigen Beschichtung ermöglicht, die vorzugsweise 95 % bis 99,5 % Maltitol enthält, und daß es aus einem Glasieren, einer harten Dragierung oder einem Glätten besteht, dem (denen) gegebenenfalls eine Gummierung vorausgeht.

11. Oberflächenbeschichtung für den Schutz oder die Verschönerung eines Produktes, bestehend aus mindestens 5 %, vorzugsweise mindestens 15 % und noch bevorzugter 20 % bis 99,5 % Maltitol-Pulver mit einer Reinheit von über 87 %, vorzugsweise von über 90 % und noch bevorzugter von über 95 %.
